(19) **Europäisches Patentamt**
**European Patent Office**
**Office européen des brevets**

(11) **EP 1 792 759 B1**

(12) **EUROPEAN PATENT SPECIFICATION**

(45) Date of publication and mention
of the grant of the patent:
**22.09.2010 Bulletin 2010/38**

(51) Int Cl.:
***B60G 17/02*** *(2006.01)* ***B60R 21/01*** *(2006.01)*
***G01B 21/04*** *(2006.01)*

(21) Application number: **06024398.7**

(22) Date of filing: **24.11.2006**

(54) **Vehicle suspension with height adjustment means**

Fahrzeugaufhängung mit Höhenverstellungsmöglichkeit

Système de réglage en hauteur pour un système de suspension

(84) Designated Contracting States:
**DE FR GB IT**

(30) Priority: **02.12.2005 KR 20050116972**

(43) Date of publication of application:
**06.06.2007 Bulletin 2007/23**

(73) Proprietor: **Mando Corporation**
**Seoul 135-739 (KR)**

(72) Inventor: **Kim, Wan Il**
**Osan-si**
**447-732 Gyeonggi-do (KR)**

(74) Representative: **Bosch, Matthias et al**
**Bosch Jehle Patentanwaltsgesellschaft mbH**
**Flüggenstrasse 13**
**80639 München (DE)**

(56) References cited:
**EP-A- 1 386 802 US-A- 4 718 695**
**US-A- 5 627 751**

**Description**

BACKGROUND OF THE INVENTION

1. Field of the Invention

The present invention relates to a vehicle height controlling suspension apparatus having a signal-freeze determining function and a vehicle height control method thereof, and more particularly, to a vehicle height controlling suspension apparatus having a signal-freeze determining function and a vehicle height control method thereof, wherein the height of a vehicle is controlled by determining whether a signal from a vehicle height sensor is frozen, thereby securing handling stability of the vehicle and preventing an excessive operation of a suspension system.

2. Description of the Related Art

Initially, a vehicle suspension apparatus was based on only the concept of simply supporting a vehicle body. However, it recently is being developed to improve ride comfort by maintaining vehicle height against the weight of a vehicle body and with respect to a road surface and absorbing shocks transmitted from the road surface to the vehicle body, and to improve handling stability of the vehicle by maintaining the vehicle body in an attitude suitable for driving.
Generally, damping force exhibits opposing properties in view of ride comfort and handling stability, and thus, there are many difficulties in determining the damping force. Accordingly, there have been recently conducted many studies on dynamic design and driving dynamics analysis in consideration of the ride comfort and handling stability of the suspension apparatus.
As a result of those studies, there has been developed a suspension apparatus capable of actively correcting changes in the attitude of a vehicle body depending on road surface conditions, driving conditions or vehicle conditions to improve driving performance, handling stability, and ride comfort of a vehicle.
A vehicle height controlling suspension apparatus has been developed in such a context. The vehicle height controlling suspension apparatus can maintain a vehicle body at a certain height depending on fluctuations of load and changes in a road surface and further may have a vehicle height varying function performed by a driver's simple operation and/or a speed-sensitive vehicle height changing function of changing vehicle height depending on changes in vehicle speed.
Various types of vehicle height controlling suspension apparatuses are being developed, implemented or studied. Among them, an air suspension apparatus for controlling vehicle height using changes in internal pressure of an air spring based on vehicle height information measured by vehicle height sensors has been widely known as disclosed in US 5 627 751.
Such an air suspension apparatus is constructed such that vehicle height sensors are installed at least one of front and rear wheel sides of a vehicle and the height of the vehicle is controlled by driving air springs installed at respective wheels, based on signals received from the respective vehicle height sensors.
In the vehicle suspension apparatus provided with such vehicle height sensors, it is determined whether signals from the vehicle height sensors, which are affected by structural or electrical defects caused by external environments, are in a normal range, and the control of the height of the vehicle is stopped if the signals are out of the normal range. That is, cases where the control of the height of a vehicle is stopped include a short circuit of a power line, an open circuit, and a ground (GND) short circuit.
However, apart from the cases where normal signals are not outputted, such as a short circuit of a power line, an open circuit and a GND short circuit, if the vehicle height sensors are in a signal-freeze (fixed output) state due to the breakdown of the sensors in which they cannot output normal signals, it is difficult to determine the signal-freeze state. Therefore, the height of a vehicle is controlled even when the sensor signals are frozen, resulting in degradation of the stability of the vehicle.
For example, if the voltage level of a vehicle height sensor is in the range of 0V to 5V, a signal of 0V to 0.5V is outputted in case of a short circuit or a GND short circuit, a signal of 0.5V to 1.9V is outputted in a case where a signal from the sensor is out of the normal range, a signal of 1.9V to 3.1V is outputted in a case where the sensor operates normally, a signal of 3.1V to 4.5V is outputted in a case where a signal from the sensor is out of the normal range, and a signal of 4.5V to 5V is outputted in case of an open circuit or a short circuit of a power line.
Such voltage sections (0.5V to 1.9V and 3.1V to 4.5V) out of the normal range appear when the sensor mounted between the vehicle body and a vehicle axle deviates from displacement that may be physically caused by relative motions of the vehicle body and the vehicle axle.
Such voltage sections out of the normal range may occur if the sensor is damaged and stuck, a sensor mounting part (a fixing screw) is loosened and drooped down by gravity, or a rotating portion of the sensor does not move.
If a sensor value deviates from the normal signal range due to such reasons, it can be easily detected. However, if a sensor signal is frozen within the normal range (1.9V to 3.1 V) and does not vary, it is difficult to determine whether the signal is normal.

That is, it is difficult to distinguish whether an output value of a vehicle height sensor is frozen due to the breakdown of the vehicle height sensor or an output value of the vehicle height sensor is frozen since the vehicle is actually maintained at a certain vehicle height.

Accordingly, even when a sensor signal is frozen within a normal range and does not vary, the vehicle suspension apparatus controls the height of a vehicle, resulting in a risk of the breakdown of a suspension system due to excessive use of the system.

SUMMARY OF THE INVENTION

It is an object of the present invention to provide a vehicle height controlling suspension apparatus having a signal-freeze determining function and a vehicle height control method thereof, wherein the height of a vehicle is controlled by determining whether a signal from a vehicle height sensor is frozen, thereby improving stability of the vehicle and preventing the breakdown of a suspension system due to excessive use of the system.

According to an aspect of the present invention for achieving the object, there is provided a vehicle height controlling suspension apparatus having a signal-freeze determining function, comprising a plurality of vehicle height sensors for measuring the height of a vehicle; vehicle height adjusting actuators driven for adjusting the height of the vehicle; and an electronic control unit (ECU) for performing adjustment of the height of the vehicle by the actuators by calculating a vehicle height variation value from vehicle height signals of the plurality of vehicle height sensors and comparing the calculated vehicle height variation value with a predetermined reference value to determine whether the signals are frozen.

The ECU may comprise a calculating section for calculating a maximum vehicle height variation value from the vehicle height signals of the plurality of vehicle height sensors for a predetermined time period; a suspect flag setting section for comparing the maximum vehicle height variation value calculated by the calculating section with the reference value and setting a state flag of a vehicle height sensor satisfying a predetermined reference condition to a suspect flag; a determination section for determining the vehicle height sensor satisfying the predetermined reference condition to be in a signal-freeze state if the number of sensors set to the suspect flag is not greater than a half of the total number of vehicle height sensors; an abnormal flag setting section for setting the state flag of the vehicle height sensor to an abnormal flag according to the determination of the determination section; and a vehicle height adjustment processing section for stopping vehicle height control of an actuator positioned to correspond to the vehicle height sensor if the state flag is set to the abnormal flag by the abnormal flag setting section.

The ECU may further comprise an alarm processing section for outputting a predetermined alarm signal if the state flag is set to the abnormal flag by the abnormal flag setting section.

The vehicle height adjustment processing section may output a predetermined alarm signal and stop the vehicle height control if the abnormal flag is set and initialized repeatedly as many as a predetermined number of times.

According to another aspect of the present invention, there is provided a vehicle height control method of a vehicle height controlling suspension apparatus having a signal-freeze determining function, comprising the steps of receiving vehicle height signals from a plurality of vehicle height sensors for measuring the height of a vehicle; and performing vehicle height control by calculating a vehicle height variation value from the received vehicle height signals and comparing the calculated vehicle height variation value with a predetermined reference value to determine whether the signals are frozen.

The step of performing the vehicle height control may comprise the steps of calculating a maximum vehicle height variation value from the vehicle height signals of the plurality of vehicle height sensors for a predetermined period of time; comparing the calculated maximum vehicle height variation value with the reference value and setting a state flag of a vehicle height sensor satisfying a predetermined reference condition to a suspect flag; determining the vehicle height sensor satisfying the predetermined reference condition to be in a signal-freeze state if the number of sensors set to the suspect flag is not greater than a half of the total number of vehicle height sensors; setting the state flag of the vehicle height sensor to an abnormal flag according to the determination; and stopping vehicle height control of an actuator positioned to correspond to the vehicle height sensor if the state flag is set to the abnormal flag.

The step of performing the vehicle height control may further comprise the step of outputting a predetermined alarm signal if the state flag is set to the abnormal flag.

The step of stopping the vehicle height control may comprise the steps of outputting a predetermined alarm signal if the abnormal flag is set and initialized repeatedly as many as a predetermined number of times; and stopping the vehicle height control.

BRIEF DESCRIPTION OF THE DRAWINGS

The above and other objects, features and advantages of the present invention will become apparent from the following description of preferred embodiments given in conjunction with the accompanying drawings, in which:

Fig. 1 is a diagram schematically showing a vehicle height controlling suspension apparatus having a signal-freeze determining function according to an embodiment of the present invention;
Fig. 2 is the block diagram specifically illustrating an ECU shown in Fig. 1; and
Fig. 3 is a flowchart illustrating a vehicle height control method of the vehicle height controlling suspension apparatus having the signal-freeze determining function according to an embodiment of the present invention.

DETAILED DESCRIPTION OF THE INVENTION

Hereinafter, a vehicle height controlling suspension apparatus having a signal-freeze determining function and a vehicle height control method thereof according to the present invention will be described in detail with reference to the accompanying drawings.

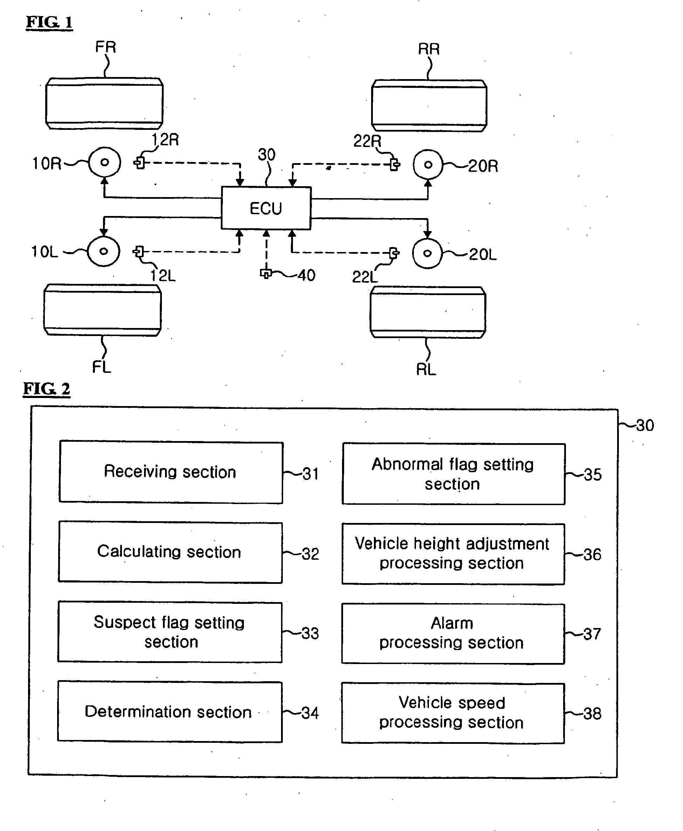

Fig. 1 is a diagram schematically showing a vehicle height controlling suspension apparatus having a signal-freeze determining function according to an embodiment of the present invention.

As shown in Fig. 1, the vehicle height controlling suspension apparatus having a signal-freeze determining function according to the present embodiment comprises a plurality of vehicle height sensors 12L, 12R, 22L and 22R for measuring the height of a vehicle, a plurality of vehicle height adjusting actuators 10L, 10R, 20L and 20R driven for adjusting the height of the vehicle, and an ECU 30 for controlling the height of the vehicle adjusted by the actuators according to signals received from the plurality of vehicle height sensors 12L, 12R, 22L and 22R.

The vehicle height sensors include front wheel-side sensors 12L and 12R installed in the vicinity of front left and right wheels FL and FR, and rear wheel-side sensors 22L and 22R installed in the vicinity of rear left and right wheels RL and RR.

In this embodiment, the vehicle height sensors 12L, 12R, 22L and 22R detect relative distances between a vehicle body and vehicle axles (i.e., vehicle height), and the most typical one in which two rotating levers are respectively mounted on the vehicle body and the vehicle axle to sense a distance therebetween by detecting a relative angle of the two levers with respect to linear displacement are employed as the vehicle height sensor.

The actuators 10L, 10R, 20L and 20R (hereinafter, referred to as "air springs") are also positioned to correspond respectively to the aforementioned vehicle height sensors 12L, 12R, 22L and 22R. Such air springs include front wheel-side left and right air springs 10L and 10R, and rear wheel-side left and right air springs 20L and 20R.

The ECU 30 receives vehicle height signals from the vehicle height sensors 12L, 12R, 22L, and 22R at the positions of respective wheels and substantially controls the height of the vehicle based on the signals.

In the embodiment of the present invention, the ECU 30 controls the front wheel-side air springs 10L and 10R and rear wheel-side air springs 20L and 20R based on the vehicle height signals received from the respective vehicle height sensors.

The ECU 30 drives, with a certain control value, a compressor (not shown) and a pneumatic circuit (not shown) including the compressor.

According to the present invention, the ECU 30 is constructed to control the height of the vehicle by comparing a vehicle height variation value calculated from the vehicle height signals received from the plurality of vehicle height sensors 12L, 12R, 22L and 22R with a predetermined reference value, and determining whether the sensor signals are frozen. The configuration of the ECU 30 will be described below with reference to Fig. 2.

Referring to Fig. 2, the ECU 30 in this embodiment determines from the freeze of a sensor signal that a sensor cannot function any more and generates a fixed output, and then stops the control of the height of the vehicle. The ECU comprises a receiving section 31 for receiving vehicle height signals, a calculating section 32 for calculating a vehicle height variation value from the received vehicle height signals, a suspect flag setting section 33 for comparing the vehicle height variation value with a predetermined reference value and setting a state flag of a sensor to a suspect flag according to whether a predetermined condition is satisfied, a determination section 34 for determining a signal-freeze state, an abnormal flag setting section 35 for setting the state flag to an abnormal flag according to the determination, a vehicle height adjustment processing section 36 for stopping vehicle height control of an air spring including a wheel on which a sensor with a state flag set to the abnormal flag is mounted, an alarm processing section 37 for notifying the breakdown of a vehicle height sensor, and a vehicle speed processing section 38 for determining whether the vehicle is in a driving state.

At this time, in addition to the control of the vehicle height of the suspension apparatus, the ECU can perform overall control on the suspension apparatus and shock absorbers, and further participate in controlling other systems of the vehicle (for example, a steering system and/or a braking system). However, since the other control is not directly related to the subject matter of the present invention, detailed descriptions thereof will be omitted.

The receiving section 31 receives vehicle height signals from the two vehicle height sensors 12L and 12R on the side of the front wheels FL and FR, and the two vehicle height sensors 22L and 22R on the side of the rear wheels RL and RR, and transmits the signals to the calculating section 32.

The calculating section 32 calculates a maximum vehicle height variation value from the respective vehicle height signals received by the receiving section 31 for a predetermined period of time (e.g., one minute), using the following equation 1:

$$\Delta H_i = \max H_i - \min H_i, \qquad i = 1,...,4 \qquad \cdots\cdots (1)$$

If the maximum vehicle height variation value calculated by the calculating section 32 is smaller than a predetermined reference value, the suspect flag setting section 33 sets a state flag of a vehicle height sensor of the vehicle height sensors that satisfies a predetermined reference condition, to a suspect flag.

If the number of sensors, which are set to the suspect flag by the suspect flag setting section 33, is smaller than a half of the total number of vehicle height sensors (i.e., two or less among the four vehicle height sensors), the determination section 34 determines the vehicle height sensor that satisfies the predetermined reference condition to be in a signal-freeze state.

For example, if the state flag of the vehicle height sensor 12L on the side of the front wheels FL and FR is set to a suspect flag, or the state flag of the vehicle height sensor 12L on the side of the front wheels FL and FR is set to a suspect flag and the state flag of the vehicle height sensor 22L on the side of the rear wheels RL and RR is set to a suspect flag, the vehicle height sensor are determined to be in a signal-freeze state (i.e., an abnormal state).

If the vehicle height sensor is determined to be in an abnormal state as such, the abnormal flag setting section 35 sets the state flag of the vehicle height sensor to an abnormal flag.

If the state flag is set to an abnormal flag, the vehicle height adjustment processing section 36 stops vehicle height control of an air spring including a wheel on which the vehicle height sensor is mounted. Here, although the present embodiment has been described in connection with the case where the vehicle height control of an air spring positioned to correspond to the sensor is stopped, it is also possible to stop vehicle height control of an air spring for a wheel in which the state flag of the vehicle height sensor is set to an abnormal flag.

In addition, if the state flag of the vehicle height sensor is set to an abnormal flag and initialized repeatedly as many as a predetermined number of times, the vehicle height adjustment processing section 36 stops the control of the height of the vehicle. That is, the vehicle height adjustment processing section 36 determines the sensor to be broken down and does not any more perform vehicle height adjustment according to a vehicle height signal from the vehicle height sensor.

If the state flag of the vehicle height sensor is set to an abnormal flag, the alarm processing section 37 outputs a predetermined alarm signal. At this time, it is preferred that a user be notified of the breakdown of the sensor through a warning lamp.

In addition, even when the state flag of the vehicle height sensor is set to an abnormal flag and initialized repeatedly as many as a predetermined number of times, the alarm processing section 37 also outputs an alarm signal through the warning lamp. Accordingly, the user can easily notice the breakdown of the vehicle height sensor.

The vehicle speed processing section 38 determines whether the vehicle is in a driving state according to whether the speed of the vehicle measured by a vehicle speed sensor 40 for measuring the speed of a vehicle is not less than a predetermined speed (e.g., 30 kph).

At this time, if the speed of the vehicle measured by the vehicle speed sensor 40 is less than a predetermined speed (e.g., 30 kph), the vehicle is determined not to be in a driving state. This case occurs when state flags of three or four vehicle height sensors are set to a suspect flag by the suspect flag setting section 33.

In this manner, it is determined whether a signal from a vehicle height sensor is frozen, so that the height of the vehicle is controlled, thereby securing the stability of the vehicle.

The vehicle height control method of the vehicle height controlling suspension apparatus having a signal-freeze determining function constructed as such will be described below.

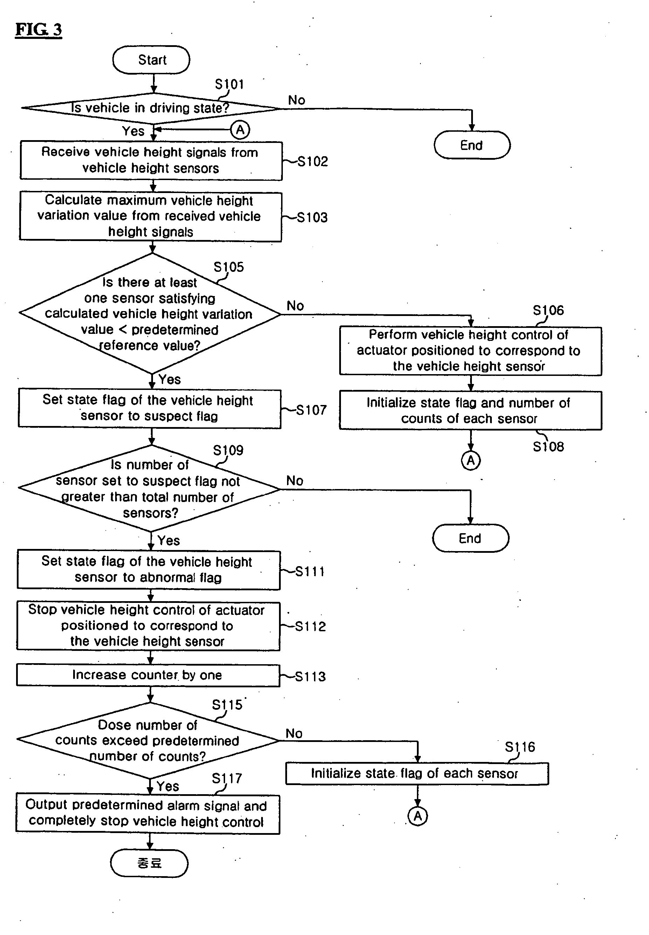

Fig. 3 is a flowchart illustrating a vehicle height control method of the vehicle height controlling suspension apparatus having the signal-freeze determining function according to an embodiment of the present invention.

The vehicle speed processing section 38 of the ECU 30 determines whether the vehicle is in a driving state (S101). That is, it determines whether the speed of the vehicle is not less than a predetermined speed (e.g., 30 kph).

If it is determined in step S101 that the vehicle is not in a driving state, the ECU 30 terminates the process.

If it is determined in step S101 that the vehicle is in a driving state, the receiving section 31 of the ECU 30 receives vehicle height signals from the plurality of vehicle height sensors 12L, 12R, 22L and 22R installed in the vehicle (S 102).

Then, the calculating section 32 of the ECU 30 calculates a maximum vehicle height variation value for each of the sensors from the vehicle height signals received for a predetermined period of time (S 103).

Next, the suspect flag setting section 33 of the ECU 30 determines whether there is at least one sensor in which the calculated maximum vehicle height variation value is smaller than a predetermined reference value (S105).

If it is determined in step S105 that there is no sensor in which the calculated maximum vehicle height variation value is smaller than a predetermined reference value, the vehicle height adjustment processing section 36 of the ECU 30 performs vehicle height adjustment of an actuator positioned to correspond to the vehicle height sensor (S106).

Next, the vehicle height adjustment processing section 36 initializes the state flag and the number of counts of each sensor (S108) and proceeds to the process of step S101 to receive vehicle height signals.

If it is determined in step S105 that there is at least one sensor in which the calculated maximum vehicle height variation value is smaller than a predetermined reference value, the suspect flag setting section 33 sets the state flag of the vehicle height sensor to a suspect flag (S107).

Next, the determination section 34 of the ECU 30 determines whether the number of sensors having a suspect flag set by the suspect flag setting section 33 is not greater than a half of the total number of vehicle height sensors (S 109). That is, if there are four vehicle height sensors, it is determined whether state flags of two or less vehicle height sensors are set to a suspect flag.

Here, if the number of sensors having the suspect flag is not greater than a half of the total number of vehicle height sensors, the determination section 34 determines that the vehicle height sensor(s) is(are) in a signal-freeze state. If the number of sensors having the suspect flag is three or four, the determination section determines that the vehicle is in a stationary state.

If it is determined in step S109 that the number of sensors having the suspect flag set by the suspect flag setting section is greater than a half of the total number of vehicle height sensors, i.e., if state flags of three or four vehicle height sensors are set to a suspect flag, the ECU 30 terminates the process.

The case where the state flags of three or four vehicle height sensors are set to a suspect flag occurs when the vehicle is in a stationary state.

If it is determined in step S109 that the number of sensors having the suspect flag set by the suspect flag setting section is not greater than a half of the total number of vehicle height sensors, i.e., if the state flags of one or two vehicle height sensors are set to a suspect flag, the abnormal flag setting section 35 of the ECU 30 sets the state flag of the vehicle height sensor to an abnormal flag (S111).

Then, the vehicle height adjustment processing section 36 temporarily stops vehicle height adjustment of an actuator positioned to correspond to the vehicle height sensor (S112). At this time, it is also possible to temporarily stop vehicle height control of the actuator.

Next, the vehicle height adjustment processing section 36 increases the number of counts by one (S113).

Then, the vehicle height adjustment processing section 36 determines whether the number of counts exceeds a predetermined number of counts (S 115).

If it is determined in step S 115 that the number of counts does not exceed a predetermined number of counts, i.e., if setting of the state flag to an abnormal flag and initialization of the state flag are not repeated as many as a predetermined number of times, the vehicle height adjustment processing section 36 initializes the state flag of each sensor (S 116) and proceeds to the process of step S101.

If it is determined in step S 115 the number of counts exceeds a predetermined number of counts, i.e., if setting of the state flag to an abnormal flag and initialization of the state flag are repeated as many as a predetermined number of times, the vehicle height adjustment processing section 36 outputs an alarm signal predetermined by the alarm processing section 37 and completely stops the vehicle height control (S117).

Although this embodiment has been described in connection with the case where vehicle height control is completely stopped if the state flag of the vehicle height sensor is set to an abnormal flag and initialized repeatedly as many as a predetermined number of times, the present invention is not limited thereto. Even when the vehicle height control is stopped and resumed repeatedly as many as a predetermined number of times, the vehicle height control may be completely stopped.

In this manner, the height of the vehicle is controlled to improve the stability of the vehicle, and the breakdown of a sensor is identified to prevent an excessive operation of the suspension system, thereby preventing the breakdown of the system.

According to the present invention described above, there is an advantage in that the height of a vehicle is controlled by determining a signal-freeze state of a vehicle height sensor, thereby improving the stability of the vehicle.

Further, according to the present invention described above, there are advantages in that the breakdown of a corresponding vehicle height sensor is identified so that an excessive operation of a suspension system can be prevented and thence the breakdown of the system can be prevented.

Moreover, according to the present invention described above, there are advantages in that a driver is notified of the breakdown of a vehicle height sensor, so that the driver can easily notice the breakdown of the vehicle height sensor and the worst dangerous situation can be prevented in advance.

The present invention is not limited to the aforementioned embodiments, and various changes and modifications can be made thereto by those skilled in the art. The various changes and modifications fall within the scope of the present invention defined by the appended claims.

**Claims**

1. A vehicle height controlling suspension apparatus having a signal-freeze determining function, the apparatus comprising:

   a plurality of vehicle height sensors (12L, 12R, 22L, 22R) or measuring the height of a vehicle;
   vehicle height adjusting actuators (10L, 10R, 20L 20R) driven for adjusting the height of the vehicle; and
   an electronic control unit (ECU) (30) for performing adjustment of the height of the vehicle by the actuators by calculating a vehicle height variation value from vehicle height signals of the plurality of vehicle height sensors and comparing the calculated vehicle height variation value with a predetermined reference value to determine whether the signals are frozen.

2. The apparatus as claimed in claim 1, wherein the ECU comprises:

   a calculating section for calculating a maximum vehicle height variation value from the vehicle height signals of the plurality of vehicle height sensors for a predetermined time period;
   a suspect flag setting section for comparing the maximum vehicle height variation value calculated by the calculating section with the reference value and setting a state flag of a vehicle height sensor satisfying a predetermined reference condition to a suspect flag;
   a determination section for determining the vehicle height sensor satisfying the predetermined reference condition to be in a signal-freeze state if the number of sensors set to the suspect flag is not greater than a half of the total number of vehicle height sensors;
   an abnormal flag setting section for setting the state flag of the vehicle height sensor to an abnormal flag according to the determination of the determination section; and
   a vehicle height adjustment processing section for stopping vehicle height control of an actuator positioned to correspond to the vehicle height sensor if the state flag is set to the abnormal flag by the abnormal flag setting section.

3. The apparatus as claimed in claim 2, wherein the ECU further comprises:

   an alarm processing section for outputting a predetermined alarm signal if the state flag is set to the abnormal flag by the abnormal flag setting section.

4. The apparatus as claimed in claim 2, wherein the vehicle height adjustment processing section outputs a predetermined alarm signal and stops the vehicle height control if the abnormal flag is set and initialized repeatedly as many as a predetermined number of times.

5. A vehicle height control method of a vehicle height controlling suspension apparatus having a signal-freeze determining function, the method comprising the steps of:

   receiving vehicle height signals from a plurality of vehicle height sensors for measuring the height of a vehicle; and
   performing vehicle height control by calculating a vehicle height variation value from the received vehicle height signals and comparing the calculated vehicle height variation value with a predetermined reference value to determine whether the signals are frozen.

6. The method as claimed in claim 5, wherein the step of performing the vehicle height control comprises the steps of:

   calculating a maximum vehicle height variation value from the vehicle height signals of the plurality of vehicle height sensors for a predetermined period of time;
   comparing the calculated maximum vehicle height variation value with the reference value and setting a state flag of a vehicle height sensor satisfying a predetermined reference condition to a suspect flag;

determining the vehicle height sensor satisfying the predetermined reference condition to be in a signal-freeze state if the number of sensors set to the suspect flag is not greater than a half of the total number of vehicle height sensors;

setting the state flag of the vehicle height sensor to an abnormal flag according to the determination; and stopping vehicle height control of an actuator positioned to correspond to the vehicle height sensor if the state flag is set to the abnormal flag.

7. The method as claimed in claim 6, wherein the step of performing the vehicle height control further comprises the step of:

outputting a predetermined alarm signal if the state flag is set to the abnormal flag.

8. The method as claimed in claim 6, wherein the step of stopping the vehicle height control comprises the steps of:

outputting a predetermined alarm signal if the abnormal flag is set and initialized repeatedly as many as a predetermined number of times; and stopping the vehicle height control.

**Patentansprüche**

1. Fahrzeughöhen-regulierende Aufhängungsvorrichtung, die eine SignalEinfrierzustand-Ermittlungsfunktion aufweist, wobei die Vorrichtung Folgendes umfasst:

eine Vielzahl von Fahrzeughöhensensoren (12L, 12R, 22L, 22R) zum Messen der Höhe eines Fahrzeugs; Fahrzeughöhen-Einstellaktuatoren (10L, 10R, 20L, 20R), die zum Einstellen der Höhe des Fahrzeugs angesteuert werden; und ein elektronisches Steuergerät (ECU; Electronic Control Unit) (30) zum Durchführen der Einstellung der Höhe des Fahrzeugs durch die Aktuatoren durch das Berechnen eines Fahrzeughöhen-Variationswertes aus Fahrzeughöhensignalen der Vielzahl von Fahrzeughöhensensoren und das Vergleichen des berechneten Fahrzeughöhen-Variationswertes mit einem vorbestimmten Referenzwert, um zu ermitteln, ob die Signale eingefroren sind.

2. Vorrichtung nach Anspruch 1, wobei das ECU Folgendes umfasst:

einen Berechnungsabschnitt zum Berechnen eines maximalen Fahrzeughöhen-Variationswertes aus den Fahrzeughöhensignalen der Vielzahl von Fahrzeughöhensensoren für einen vorbestimmten Zeitraum; einen Suspect Flag (Fehlerverdächtig-Flag) -Setzabschnitt zum Vergleichen des maximalen Fahrzeughöhen-Variationswertes, der von dem Berechnungsabschnitt berechnet worden ist, mit dem Referenzwert und zum Setzen eines State Flag (Zustands-Flag) eines Fahrzeughöhensensors, der eine vorbestimmte Referenzbedingung erfüllt, auf ein Suspect Flag; einen Ermittlungsabschnitt zum Ermitteln, dass sich der Fahrzeughöhensensor, der die vorbestimmte Referenzbedingung erfüllt, in einem Signaleinfrierzustand befindet, wenn die Anzahl von Sensoren, die auf das Suspect Flag gesetzt sind, nicht größer als eine Hälfte der gesamten Anzahl von Fahrzeughöhensensoren ist; einen Abnormal Flag (Abnormal-Flag) -Setzabschnitt zum Setzen des State Flag des Fahrzeughöhensensors entsprechend der Ermittlung des Ermittlungsabschnitts auf ein Abnormal Flag; und einen Fahrzeughöheneinstellungs-Verarbeitungsabschnitt zum Stoppen einer Fahrzeughöhenregulierung eines Aktuators, der so positioniert ist, dass er mit dem Fahrzeughöhensensor korrespondiert, wenn das State Flag von dem Abnormal Flag -Setzabschnitt auf das Abnormal Flag gesetzt wird.

3. Vorrichtung nach Anspruch 2, wobei das ECU des Weiteren Folgendes umfasst:

einen Alarmverarbeitungsabschnitt zum Ausgeben eines vorbestimmten Alarmsignals, wenn das State Flag von dem Abnormal Flag - Setzabschnitt auf das Abnormal Flag gesetzt wird.

4. Vorrichtung nach Anspruch 2, wobei der Fahrzeughöheneinstellungs-Verarbeitungsabschnitt ein vorbestimmtes Alarmsignal ausgibt und die Fahrzeughöhenregulierung stoppt, wenn das Abnormal Flag so oft wie eine vorbestimmte Anzahl von Malen wiederholt gesetzt und initialisiert wird.

5. Fahrzeughöhen-Regulierungsverfahren einer die Fahrzeughöhe regulierenden Aufhängungsvorrichtung, die eine Signal-Einfrierzustand-Ermittlungsfunktion aufweist, wobei das Verfahren die folgenden Schritte umfasst:

Empfangen von Fahrzeughöhensignalen von einer Vielzahl von Fahrzeughöhensensoren zum Messen der Höhe eines Fahrzeugs; und

Durchführen einer Fahrzeughöhenregulierung durch das Berechnen eines Fahrzeughöhen-Variationswertes aus den empfangenen Fahrzeughöhensignalen und Vergleichen des berechneten Fahrzeughöhen-Variationswertes mit einem vorbestimmten Referenzwert, um zu ermitteln, ob die Signale eingefroren sind.

6. Verfahren nach Anspruch 5, wobei der Schritt des Durchführens der Fahrzeughöhenregulierung die folgenden Schritte umfasst:

Berechnen eines maximalen Fahrzeughöhen-Variationswertes aus den Fahrzeughöhensignalen der Vielzahl von Fahrzeughöhensensoren für einen vorbestimmten Zeitraum;

Vergleichen des berechneten maximalen Fahrzeughöhen-Variationswertes mit dem Referenzwert und Setzen eines State Flag eines Fahrzeughöhensensors, der eine vorbestimmte Referenzbedingung erfüllt, auf ein Suspect Flag;

Ermitteln, dass sich der Fahrzeughöhensensor, der die vorbestimmte Referenzbedingung erfüllt, in einem Signaleinfrierzustand befindet,

wenn die Anzahl von Sensoren, die auf das Suspect Flag gesetzt sind,

nicht größer als eine Hälfte der gesamten Anzahl von Fahrzeughöhensensoren ist;

Setzen des State Flag des Fahrzeughöhensensors entsprechend der Ermittlung auf ein Abnormal Flag; und

Stoppen der Fahrzeughöhenregulierung eines Aktuators, der so positioniert ist, dass er mit dem Fahrzeughöhensensor korrespondiert,

wenn das State Flag auf das Abnormal Flag gesetzt wird.

7. Verfahren nach Anspruch 6, wobei der Schritt des Durchführens der Fahrzeughöhenregulierung des Weiteren den folgenden Schritt umfasst:

Ausgeben eines vorbestimmten Alarmsignals, wenn das State Flag auf das Abnormal Flag gesetzt wird.

8. Verfahren nach Anspruch 6, wobei der Schritt des Stoppens der Fahrzeughöhenregulierung die folgenden Schritte umfasst:

Ausgeben eines vorbestimmten Alarmsignals, wenn das Abnormal Flag so oft wie eine vorbestimmte Anzahl von Malen wiederholt gesetzt und initialisiert wird; und

Stoppen der Fahrzeughöhenregulierung.

**Revendications**

1. Appareil de suspension commandant la hauteur d'un véhicule possédant une fonction de détermination de gel de signal, l'appareil comprenant :

une pluralité de capteurs de hauteur de véhicule (12L, 12R, 22L, 22R) destinés à mesurer la hauteur d'un véhicule ;

des actionneurs de réglage de hauteur de véhicule (10L, 10R, 20L, 20R) entraînés pour régler la hauteur du véhicule ; et

une unité de commande électronique (ECU) (30) destinée à exécuter le réglage de la hauteur du véhicule par les actionneurs en calculant une valeur de variation de hauteur de véhicule à partir des signaux de hauteur de véhicule de la pluralité de capteurs de hauteur de véhicule et en comparant la valeur de variation de hauteur de véhicule calculée à une valeur de référence prédéterminée pour déterminer si les signaux sont gelés.

2. Appareil selon la revendication 1, dans lequel l'ECU comprend :

une section de calcul destinée à calculer une valeur de variation de hauteur de véhicule maximale à partir des signaux de hauteur de véhicule de la pluralité de capteurs de hauteur de véhicule pendant une période de temps prédéterminée ;

une section d'établissement d'indicateur suspect destinée à comparer la valeur de variation de hauteur de véhicule maximale calculée par la section de calcul à la valeur de référence et établissant un indicateur d'état d'un capteur de hauteur de véhicule satisfaisant une condition de référence prédéterminée à un indicateur suspect ;

une section de détermination destinée à déterminer le capteur de hauteur de véhicule satisfaisant la condition de référence prédéterminée devant être dans un état de signal gelé si le nombre de capteurs établis à l'indicateur suspect n'est pas supérieur à la moitié du nombre total de capteurs de hauteur de véhicule ;

une section d'établissement d'indicateur anormal destinée à établir l'indicateur d'état du capteur de hauteur de véhicule à un indicateur anormal conformément à la détermination de la section de détermination ; et

une section de traitement de réglage de hauteur de véhicule destinée à arrêter la commande de hauteur de véhicule d'un actionneur positionné pour correspondre au capteur de hauteur de véhicule si l'indicateur d'état est établi à l'indicateur anormal par la section d'établissement d'indicateur anormal.

3. Appareil selon la revendication 2, dans lequel l'ECU comprend en outre :

une section de traitement d'alarme destinée à délivrer en sortie un signal d'alarme prédéterminé si l'indicateur d'état est établi à l'indicateur anormal par la section d'établissement d'indicateur anormal.

4. Appareil selon la revendication 2, dans lequel la section de traitement de réglage de hauteur de véhicule délivre en sortie un signal d'alarme prédéterminé et arrête la commande de hauteur de véhicule si l'indicateur anormal est établi et initialisé de manière répétée aussi souvent qu'un nombre de fois prédéterminé.

5. Procédé de commande de hauteur de véhicule d'un appareil de suspension commandant la hauteur d'un véhicule possédant une fonction de détermination de gel de signal, le procédé comprenant les étapes de :

réception de signaux de hauteur de véhicule provenant d'une pluralité de capteurs de hauteur de véhicule destinés à mesurer la hauteur d'un véhicule ; et

réalisation d'une commande de hauteur de véhicule en calculant une valeur de variation de hauteur de véhicule à partir des signaux de hauteur de véhicule reçus et en comparant la valeur de variation de hauteur de véhicule calculée à une valeur de référence prédéterminée pour déterminer si les signaux sont gelés.

6. Procédé selon la revendication 5, dans lequel l'étape de réalisation de la commande de hauteur de véhicule comprend les étapes de :

calcul d'une valeur de variation de hauteur de véhicule maximale à partir des signaux de hauteur de véhicule de la pluralité de capteurs de hauteur de véhicule pendant une période de temps prédéterminée ;

comparaison de la valeur de variation de hauteur de véhicule maximale calculée à la valeur de référence et établissement d'un indicateur d'état d'un capteur de hauteur de véhicule satisfaisant une condition de référence prédéterminée à un indicateur suspect ;

détermination du capteur de hauteur de véhicule satisfaisant la condition de référence prédéterminée pour être dans un état de signal gelé si le nombre de capteurs établis à l'indicateur suspect n'est pas supérieur à une moitié du nombre total de capteurs de hauteur de véhicule ;

établissement de l'indicateur d'état du capteur de hauteur de véhicule à un indicateur anormal conformément à la détermination ; et

arrêt de la commande de hauteur de véhicule d'un actionneur positionné pour correspondre au capteur de hauteur de véhicule si l'indicateur d'état est établi à l'indicateur anormal.

7. Procédé selon la revendication 6, dans lequel l'étape de réalisation de la commande de hauteur de véhicule comprend en outre l'étape de :

délivrance en sortie d'un signal d'alarme prédéterminé si l'indicateur d'état est établi à l'indicateur anormal.

8. Procédé selon la revendication 6, dans lequel l'étape d'arrêt de la commande de hauteur de véhicule comprend les étapes de :

délivrance en sortie d'un signal d'alarme prédéterminé si l'indicateur anormal est établi et initialisé de manière répétée aussi souvent qu'un nombre de fois prédéterminé ; et
arrêt de la commande de hauteur de véhicule.

**FIG 1**

FR

RR

12R

10R

30

22R

20R

ECU

10L

12L

40

22L

20L

FL

RL

**FIG 2**

30

| Receiving section | 31 | Abnormal flag setting section | 35 |

| Calculating section | 32 | Vehicle height adjustment processing section | 36 |

| Suspect flag setting section | 33 | Alarm processing section | 37 |

| Determination section | 34 | Vehicle speed processing section | 38 |

**EP 1 792 759 B1**

**FIG. 3**

Start
↓
S101 — Is vehicle in driving state? — No → End
↓ Yes ← (A)

S102 — Receive vehicle height signals from vehicle height sensors
↓
S103 — Calculate maximum vehicle height variation value from received vehicle height signals
↓
S105 — Is there at least one sensor satisfying calculated vehicle height variation value < predetermined reference value? — No →
  S106 — Perform vehicle height control of actuator positioned to correspond to the vehicle height sensor
  ↓
  S108 — Initialize state flag and number of counts of each sensor
  ↓
  (A)

↓ Yes
S107 — Set state flag of the vehicle height sensor to suspect flag
↓
S109 — Is number of sensor set to suspect flag not greater than total number of sensors? — No → End
↓ Yes
S111 — Set state flag of the vehicle height sensor to abnormal flag
↓
S112 — Stop vehicle height control of actuator positioned to correspond to the vehicle height sensor
↓
S113 — Increase counter by one
↓
S115 — Dose number of counts exceed predetermined number of counts? — No →
  S116 — Initialize state flag of each sensor
  ↓
  (A)

↓ Yes
S117 — Output predetermined alarm signal and completely stop vehicle height control
↓
종료

13

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5627751 A